# EUROPEAN PATENT APPLICATION

(11) **EP 2 603 020 A1**
(43) Date of publication of application: **12.06.2013**
(21) Application number: 11752856.2
(22) Date of filing: 20.04.2011
(51) Int. Cl.: H04W 4/14

(54) **METHOD, SERVER, TERMINAL FOR DISPLAYING SHORT MESSAGE ICON**

(30) Priority: 05.08.2010 CN 201010251914
(71) Applicant: Huawei Technologies Co., Ltd., Shenzhen, Guangdong 518129 (CN)
(72) Inventor: WANG, Qingshan, Shenzhen Guangdong 518129 (CN); LIU, Xiaoming, Shenzhen Guangdong 518129 (CN); LUO, Yu, Shenzhen Guangdong 518129 (CN)
(74) Representative: Goddar, Heinz J.
(86) International application number: PCT/CN2011/073065
(87) International publication number: WO 2011/110113

(57) **Abstract**

The present invention provides a method, server, and terminal for dynamically modifying a short message icon. The method includes: receiving a first short message sent to a recipient user terminal, where the first short message carries sender information and recipient information of the short message; selecting, according to the sender information and recipient information of the first short message, a short message icon identifier to be displayed by the recipient user terminal; and sending a second short message to the recipient user terminal, where the second short message carries the selected short message icon identifier so that the recipient user terminal displays, according to the selected short message icon identifier, a short message icon corresponding to the selected short message icon identifier, The present invention enables more convenient and flexible displaying of a short message icon.

## Description

This application claims priority to Chinese Patent Application No. 201010251914.7, filed with the Chinese Patent Office on August 5, 2010 and entitled "METHOD, SERVER, AND TERMINAL FOR DISPLAYING SHORT MESSAGE ICON", which is incorporated herein by reference in its entirety.

### FIELD OF THE INVENTION

The present invention relates to the field of communications technologies, and in particular, to a method, server, and terminal for displaying a short message icon.

### BACKGROUND OF THE INVENTION

A short message advertisement is usually some advertisement information appended to a normal short message, and is difficult for a user to accept. It is required that the user's normal use of a short message function should not be affected when the short message carries advertisement information. After the inbox of the short message function is opened, an icon is displayed in front of the short message, and the icon is a default and fixed icon in the mobile phone. In the prior art, an over-the-air technology (OTA, Over-the-Air Technology) may be used to change an icon stored in specific mobile phone, so that different short message icons may be stored and displayed in different time segments. However, the OTA technology in the prior art can only store and display, based on specific mobile phones, different short message icons in different time segments, resulting in mechanical and inflexible displaying of short message icons.

### SUMMARY OF THE INVENTION

The objective of the present invention is to provide a method and communication system for dynamically displaying a short message icon, so as to solve the problem in the prior art that the OTA technology can only display stored a short message icon for specific mobile phone.

An embodiment of the present invention provides a method for dynamically displaying a short message icon, including: receiving a first short message sent to a recipient user terminal, where the first short message carries sender information and recipient information of the short message; selecting, according to the sender information and recipient information of the first short message, a short message icon identifier to be displayed by the recipient user terminal; and sending a second short message to the recipient user terminal, where the second short message carries the selected short message icon identifier so that the recipient user terminal displays, according to the selected short message icon identifier, a short message icon corresponding to the selected short message icon identifier.

Another embodiment of the present invention provides a method for dynamically displaying a short message icon, including: receiving a short message, where the short message carries a short message icon identifier; obtaining, according to the short message icon identifier, a stored short message icon corresponding to the short message icon identifier; and displaying the short message icon.

Another embodiment of the present invention provides a server for dynamically displaying a short message icon, including: a receiving unit, configured to receive a first short message sent to a recipient user terminal, where the first short message carries sender information and recipient information of the short message; a selecting unit, configured to select, according to the sender information and recipient information of the short message, a short message icon identifier to be displayed by the recipient user terminal; and a sending unit, configured to send a second short message to the recipient user terminal, where the second short message carries the selected short message icon identifier so that the recipient user terminal displays, according to the selected short message icon identifier, a short message icon corresponding to the selected short message icon identifier.

Another embodiment of the present invention provides a terminal for dynamically displaying a short message icon, including: a receiving unit, configured to receive a short message, where the short message carries a short message icon identifier; an obtaining unit, configured to obtain, according to the short message icon identifier, a stored short message icon corresponding to the short message icon identifier; and a displaying unit, configured to display the short message icon.

In the embodiments of the present invention, a short message icon identifier to be displayed by the recipient user terminal is selected according to the sender information and recipient information of the short message, and the selected short message icon identifier is carried in the short message sent to the recipient user terminal, so that the recipient user terminal displays the selected short message icon. Therefore, the recipient user terminal may dynamically display a short message icon according to the sender information of a short message, which avoids the problem in the prior art that stored short message icon can only be displayed for specific mobile phone in different time segments, and enables more convenient and flexible displaying of short message icon.

### BRIEF DESCRIPTION OF THE DRAWINGS

To make the technical solutions of the embodiments of the present invention clearer, the accompanying drawings used in the description of the embodiments are briefly described below. Evidently, the accompanying drawings illustrate some exemplary embodiments of the present invention and persons skilled in the art may obtain other drawings based on these drawings without creative efforts.

FIG 1 is a flowchart of a method for dynamically displaying a short message icon according to a first embodiment of the present invention;

FIG. 2 is a flowchart of a method for dynamically displaying a short message icon according to a second embodiment of the present invention;

FIG. 3 is a structural diagram of a server for dynamically displaying a short message icon according to a third embodiment of the present invention; and

FIG. 4 is a structural diagram of a terminal for dynamically displaying a short message icon according to a fourth embodiment of the present invention.

### DETAILED DESCRIPTION OF THE EMBODIMENTS

To make the objective, technical solutions, and advantages of the embodiments of the present invention clearer, the following describes the embodiments of the present invention in detail with reference to accompanying drawings. The exemplary embodiments of the present invention and the description thereof are intended to explain the present invention, and shall not be construed as a limitation on the present invention.

### embodiment 1

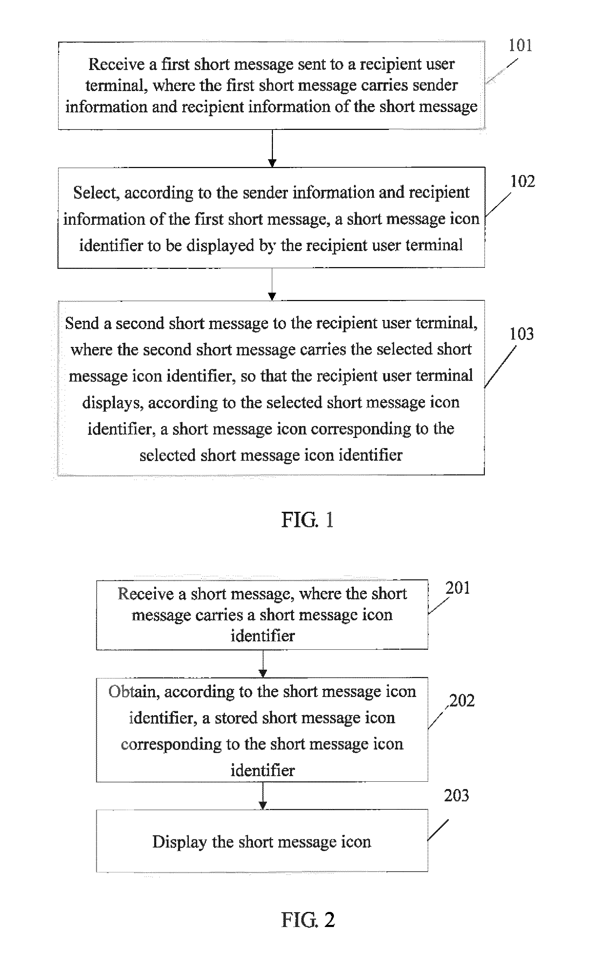

This embodiment provides a method for dynamically displaying a short message icon. As shown in FIG. 1, the method includes the following steps:

Step 101: Receive a first short message sent to a recipient user terminal, where the first short message carries sender information and recipient information of the short message.

This step is executed by a server for dynamically displaying a short message icon, and specifically, may be executed by a receiving unit in the server. In this step, the server for dynamically displaying the short message icon receives a first message sent by an operator or other senders to the recipient user terminal, where the first short message carries sender information for indicating the operator identifier or other sender identities, such as a number or other identities, and recipient information for indicating a user terminal identifier, such as a mobile phone number or other identities.

Step 102: Select, according to the sender information and recipient information of the first short message, a short message icon identifier to be displayed by the recipient user terminal.

This step is executed by the server for dynamically displaying the short message icon, and specifically, may be executed by a selecting unit in the server. The step is specifically as follows: the server for dynamically displaying the short message icon obtains, according to the recipient information, the stored short message icon identifier corresponding to the short message icon sent to the recipient user terminal; and selects, according to the sender information of the short message and the stored short message icon identifier corresponding to the short message icon sent to the recipient user terminal, the short message icon identifier to be displayed by the recipient user terminal.

In this embodiment, the server for dynamically displaying the short message icon matches and stores the short message icon identifier corresponding to the short message icon sent to the recipient user terminal and the recipient information. Different short message icon identifiers correspond to different senders. For the specific mapping, reference may be made to Table 1:

**Table 1**

| Recipient Information | Code | Meaning |
|---|---|---|
| Msisdn_1 | 0101 | China Unicom Guangdong Branch |
| | 0201 | China Mobile Guangdong Branch |
| | ··· | ··· |

Therefore, after obtaining, according to the recipient information in the first short message, the short message icon identifier stored by the recipient, the server for dynamically displaying the short message icon may select, according to the sender information in the first short message and the stored short message icon identifier corresponding to the short message icon sent to the recipient user terminal, the short message icon identifier to be displayed by the recipient user terminal.

Step 103: Send a second short message to the recipient user terminal, where the second short message carries the selected short message icon identifier, so that the recipient user terminal displays, according to the selected short message icon identifier, a short message icon corresponding to the selected short message icon identifier.

This step is executed by the server for dynamically displaying the short message icon, and specifically, may be executed by a sending unit in the server. This step is specifically as follows: the server for dynamically displaying the short message icon sends, according to the recipient information, the second short message to a user terminal, such as a value-added data short message (OTA short message). The second short message may carry the selected short message icon identifier which is used for instructing a terminal to display the short message icon corresponding to the selected short message icon identifier. The short message icon identifier may be carried by extending unused bytes in a short message protocol. Taking the SMS-DELIVER message as an example, the initial byte of the SMS-DELIVER message includes information such as TP-MTI, TP-MMS, TP-SRI, TP-UDHI, and TP-RP, and for the specific distribution, reference may be made to the form of Table 2:

**Table 2**

| Bit7 | Bit6 | Bit5 | Bit4 | Bit3 | Bit2 | Bit1 | Bit0 |
|---|---|---|---|---|---|---|---|
| TP-RP | TP-UDHI | TP-SRI | | | TP-MMS | TP-MTI | |

The two unused bit4 and bit3 may be used to carry a short message icon identifier, or other extended fields may be used to support more selections, for example, the short message icon identifier is carried in the message header of a sent second short message. The specific short message icon identifier is stored in the form of a database in the user terminal and the server for dynamically displaying the short message icon respectively, and for the form, reference may be made to the form in Table 1.

In the first embodiment, before step 102 is executed, the server for dynamically displaying the short message icon may also obtain, according to the recipient information carried in the first short message, the device capability information of the recipient user terminal; and determine, according to the device capability information of the recipient user terminal, that the recipient user terminal supports dynamically displaying the short message icon. For the description of the device capability information of the recipient user terminal, reference may be made to Table 3. The server for dynamically displaying the short message icon determines that the recipient user terminal supports dynamically displaying the short message icon, which is specifically as follows: the server for dynamically displaying the short message icon judges, according to the hardware identifier in the device information, that the recipient user terminal supports the function of customizing OTA and the function of receiving extended short messages.

The obtaining, according to the recipient information, the device capability information of the recipient user terminal, is executed by the server for dynamically displaying the short message icon, and specifically, may be executed by an obtaining unit in the server. This step may specifically be as follows: querying an information database according to the recipient information and obtaining the device capability information indicating that the user terminal supports customizing OTA and/or receiving extended short messages. The information database may be located in the server for dynamically displaying the short message icon, or may be a separate entity server. For example, the information database is located in the server for dynamically displaying the short message icon. An update process is performed when the user terminal is powered on or during a cell handover and the server for dynamically displaying the short message icon receives a location update message reported by the user terminal; the location update message may carry a user identifier (such as an international mobile subscriber identifier number, international Mobile Subscriber Identification Number, imsi), recipient information (such as a mobile subscriber international ISDN number,, Mobile Subscriber International ISDN, msisdn) and a hardware identifier (international mobile equipment identifier, IMEI). After a mobile switching center (Mobile Switching Center) MSC authenticates a user, the MSC reports the above update information to the server for dynamically displaying the short message icon. The server for dynamically displaying the short message icon obtains the device capability information of the user terminal through the hardware identifier, and matches and stores the above information through a storage table, therefore establishing an information database. The structure of the storage table is shown in Table 3:

**Table 3**

| User Identifier | Hardware Identifier | Recipient Information | Device Capability Information |
|---|---|---|---|
| Imsi_1 | IMEI_1 | Msisdn_1 | Support customizing OTA |
| Imsi_2 | IMEI_2 | Msisdn_2 | Support receiving extended short messages |
| Imsi_3 | IMEI_3 | Msisdn_3 | Support customizing OTA and receiving extended short messages |

The server for dynamically displaying the short message icon queries the information database to obtain the capability information indicating whether the terminal corresponding to the hardware identifier in the above location update message supports customizing the OTA technology and/or receiving extended short messages. The server for dynamically displaying the short message icon determines, according to the capability information in the device information, whether the terminal corresponding to the hardware identifier supports customizing the OTA technology and/or receiving extended short messages. If both the function of customizing the OTA technology and the function of receiving extended short messages are supported, the server determines that the short message recipient supports dynamically displaying a short message icon, and then sends a short message icon and a corresponding short message icon identifier to the recipient user terminal according to the user identifier or the device capability information of the user terminal, so that the recipient user terminal stores the short message icon and the corresponding short message icon identifier; and stores the short message icon identifier sent to the recipient user terminal. The server for dynamically displaying short message icon may further send, according to the stored short message icon identifier, a short message icon identifier that needs to be deleted to the recipient user terminal, so that the recipient user terminal deletes the stored short message icon identifier and the corresponding short message icon according to the short message icon identifier that needs to be deleted.

In this embodiment, the server for dynamically displaying short message icon may be a separate entity server, or may be located in a short message center.

this embodiment, a short message icon identifier to be displayed by the recipient user terminal is selected according to the sender information and recipient information of the short message, and the selected short message icon identifier is carried in the short message sent to the recipient user terminal, so that the recipient user terminal displays the selected short message icon. Therefore, the recipient user terminal may dynamically display short message icon according to the sender information of short messages.

### Embodiment 2

This embodiment provides a method for dynamically displaying a short message icon. As shown in FIG. 2, the method includes the following steps:

Step 201: Receive a short message, where the short message carries a short message icon identifier.

This step is executed by a user terminal, and specifically, may be executed by a receiving unit in the user terminal. The step is specifically as follows: the user terminal receives a short message sent by a short message center, where the short message carries a short message icon identifier.

Step 202: Obtain, according to the short message icon identifier, a stored short message icon corresponding to the short message icon identifier.

This step is executed by the user terminal, and specifically, may be executed by a querying unit in the user terminal. The step is specifically as follows: the user terminal queries, according to the short message icon identifier, the stored short message icon corresponding to the short message icon identifier, and obtains the short message icon corresponding to the short message icon identifier.

In an embodiment, when the user terminal is powered on or during a cell handover, an update process is performed, and a location update message is reported. The location update message carries a user identifier (such as an international mobile subscriber identifier number, international Mobile Subscriber Identifier Number, imsi), recipient information (such as a mobile subscriber international ISDN number, Mobile Subscriber International ISDN, msisdn) and a hardware identifier (IMEI). The location update message may further carry the device capability information of the user terminal. After authenticating the user, an MSC reports the above information to a server for dynamically displaying short message icon. The server for dynamically displaying a short message icon stores the above information through a storage table, therefore establishing an information database, and obtains the capability information corresponding to the terminal according to the IMEI, and stores the information. The server for dynamically displaying short message icon judges, according to the capability information in the device information, whether the user terminal supports the function of customizing OTA and the function of receiving extended short messages. If both the function of customizing OTA and the function of receiving extended short messages are supported, the server determines that the short message recipient supports dynamically displaying short message icon, and then sends a short message icon and a corresponding short message icon identifier to the recipient user terminal according to the user identifier or the device information, so that the recipient user terminal stores the short message icon and the corresponding short message icon identifier.

In addition, after receiving the location update message reported by the terminal, the server for dynamically displaying a short message icon may further judge, according to the terminal capability information obtained through the IMEI in the location update message, how many short message icon identifiers can be stored by the terminal, and determine, according to the number of short message icon identifiers stored supported by the terminal and the recipient information of the location update message, whether to delete a short message icon stored by the terminal. For example, the terminal may support storing a lot of short message icon, for example, 20, but the terminal stores only 8 short message icon at this time. According to the user identifier in the location update message, it is determined that the user has changed the network, for example, changed from China Mobile to China Unicom, and that short message icon related to China Unicom need to be added. In this case, the server for dynamically displaying a short message icon may directly send the short message icon related to China Unicom and the corresponding short message icon identifiers to the terminal. However, in this embodiment, if the terminal only supports storing 8 icons, the short message center needs to send a message for instructing the terminal to delete the short message icon stored by the terminal and the corresponding short message icon identifiers and a message for instructing the terminal to add a short message icon and the corresponding short message icon. Of course, the instruction for deleting a short message icon and the instruction for adding a short message icon may be in a same message.

Step 203: Display the short message icon. This step is executed by the user terminal, and specifically, may be executed by a displaying unit in the user terminal.

In addition, in the exemplary embodiment, the user terminal may also delete the stored short message icon identifier and corresponding short message icon according to the short message icon identifier that needs to be deleted.

In this embodiment, the user terminal receives and stores the short message icon and the corresponding short message icon identifier, and then displays the corresponding short message icon according to the short message icon identifier sent by the server for dynamically displaying a short message icon, so that the recipient user terminal may dynamically display the short message icon according to the sender information of the short message.

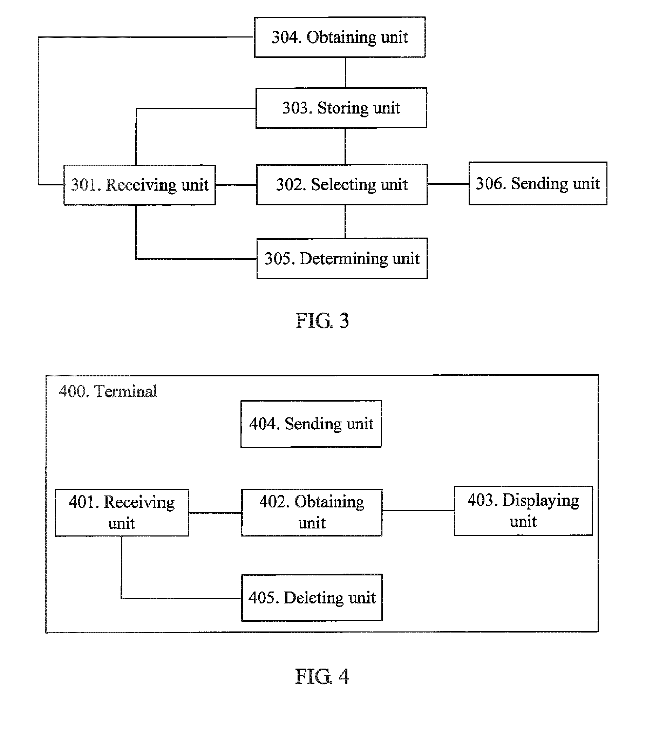

This embodiment provides a server for dynamically displaying a short message icon. As shown in FIG. 3, the server includes: a receiving unit 301, configured to receive a first short message sent to a recipient user terminal, where the first short message carries sender information and recipient information of the short message; a selecting unit 302, configured to select, according to the sender information and recipient information of the short message, a short message icon identifier to be displayed by the recipient user terminal; and a sending unit 306, configured to send a second short message to the recipient user terminal, where the second short message carries the selected short message icon identifier so that the recipient user terminal displays, according to the selected short message icon identifier, a short message icon corresponding to the selected short message icon identifier.

In another embodiment of the present invention, the receiving unit 301 is further configured to receive a location update message sent by the recipient user terminal, where the location update message carries a recipient user identifier and recipient information; the sending unit 306 is further configured to send a short message icon and the corresponding short message icon identifier according to the recipient user identifier to the recipient user terminal, so that the recipient user terminal stores the short message icon and the corresponding short message icon identifier; the server further includes a storing unit 303, configured to store the location update message sent by the recipient user terminal, and stores the recipient user identifier, the recipient information, and the short message icon identifier that are corresponding to the short message icon sent to the recipient user terminal.

In addition, the selecting unit 302 is specifically configured to obtain, according to the recipient information, the stored short message icon identifier corresponding to the short message icon sent to the recipient user terminal; and select, according to the sender information of the short message and the stored short message icon identifier corresponding to the short message icon sent to the recipient user terminal, the short message icon identifier to be displayed by the recipient user terminal.

In addition, the embodiment of the present invention may further include a determining unit 305, configured to determine, according to capability information included in the recipient information, that the recipient user terminal supports dynamically displaying short message icon.

In another embodiment of the present invention, the location update message further carries a recipient hardware identifier; the server further includes an obtaining unit 304, configured to obtain, according to the recipient hardware identifier, the device capability information corresponding to the hardware identifier; the storing unit 303 is further configured to store the recipient hardware identifier, device capability information, and recipient user identifier, or store the recipient hardware identifier, device capability information, and recipient user identifier, and recipient information; the sending unit 306 being further configured to send, according to the recipient user identifier, the short message icon and the corresponding short message icon identifier to the recipient user terminal includes: obtaining, by the sending unit, the device capability information of the recipient user terminal according to the recipient user identifier, and sending the short message icon and the corresponding short message icon identifier to the recipient user terminal according to the device capability information of the recipient user terminal and the recipient user identifier.

In addition, the sending unit 306 is further configured to send, according to the stored short message icon identifier, the recipient user identifier, and the device capability information of the recipient user terminal, a short message icon identifier that needs to be deleted to the recipient user terminal, so that the recipient user terminal deletes the stored short message icon identifier and corresponding short message icon according to the short message icon identifier that needs to be deleted.

In this embodiment, the server for dynamically displaying a short message icon may be a separate server, or may be located in a short message center, but may be a separate computer in both cases. The function of the receiving unit 301 may be executed by a computer, and the function of the sending unit 306 may be executed by a transmitter in the computer. The selecting unit 302, storing unit 303, obtaining unit 304, and determining unit 305 may all run on the processor of the computer. The server for dynamically displaying a short message icon as shown in FIG. 3 may execute any step executed by the server for dynamically displaying a short message icon in the embodiments shown in FIG. 1 and FIG. 2. Details are disclosed in the foregoing method embodiments and not provided here again.

In the embodiment of the present invention, the server for dynamically displaying a short message icon may select, according to the sender information and recipient information of the short message, the short message icon identifier to be displayed by the recipient user terminal, and carry the selected short message icon identifier in the short message sent to the recipient user terminal, so that the recipient user terminal displays the selected short message icon. Therefore, the recipient user terminal may dynamically display a short message icon according to the sender information of short messages.

FIG. 4 is a structural diagram of a terminal for dynamically displaying a short message icon according to a fourth embodiment of the present invention. The terminal for dynamically displaying a short message icon includes: a receiving unit 401, configured to receive a short message, where the short message carries a short message icon identifier; an obtaining unit 402, configured to obtain, according to the short message icon identifier, a stored short message icon corresponding to the short message icon identifier; and a displaying unit 403, configured to display the short message icon.

In another embodiment of the present invention, the terminal for dynamically displaying a short message icon further includes: a sending unit 404, configured to send a location update message, where the location update message carries a recipient user identifier and recipient information, so that a server for dynamically displaying a short message icon sends the short message icon and the corresponding short message icon identifier according to the recipient user identifier or recipient information; the receiving unit 401 is further configured to receive the short message icon and the corresponding short message icon identifier that are sent by the server for dynamically displaying a short message icon, and store the short message icon and the corresponding short message icon identifier.

In another embodiment of the present invention, the receiving unit 401 is further configured to receive a short message icon identifier that needs to be deleted; the terminal for dynamically displaying a short message icon further includes: a deleting unit 405, configured to delete the stored short message icon identifier and the corresponding short message icon according to the short message icon identifier that needs to be deleted.

In this embodiment, the terminal for dynamically displaying a short message icon may be various terminals such as a mobile phone and a PC. The function of the receiving unit 401 may be executed by a receiver in the terminal, and the sending unit 404 may be a transmitter in the terminal. The obtaining unit 402 and the deleting unit 40 may run on the processor of the terminal. The displaying unit may be a display screen of the terminal. The server for dynamically displaying a short message icon as shown in FIG. 4 may execute any step executed by the terminal for dynamically displaying a short message icon in the embodiments shown in FIG. 1 and FIG. 2. Details are disclosed in the foregoing method embodiments and not provided here again.

The terminal for dynamically displaying a short message icon in the embodiments of the present invention may display different short message icons according to different short message icon identifiers carried in the received short messages, so that the terminal displays the short message icon more flexibly.

The above embodiments clarify the objective, technical solutions, and benefits of the present invention in detail. It should be understood that the invention has been described with reference to some exemplary embodiments, but is not limited thereto. Any modifications, substitutions, and improvements made to the invention without departing from the spirit and principle of the invention shall fall within the protection scope of the invention.

## Claims

1. A method for dynamically displaying a short message icon, comprising:
receiving a first short message sent to a recipient user terminal, wherein the first short message carries sender information and recipient information of a short message;
selecting, according to the sender information and recipient information of the first short message, a short message icon identifier to be displayed by the recipient user terminal; and
sending a second short message to the recipient user terminal, wherein the second short message carries the selected short message icon identifier so that the recipient user terminal displays, according to the selected short message icon identifier, a short message icon corresponding to the selected short message icon identifier.

2. The method according to claim 1, further comprising:
receiving and storing a location update message sent by the recipient user terminal, wherein the location update message carries a recipient user identifier and recipient information;
sending a short message icon and a corresponding short message icon identifier to the recipient user terminal according to the recipient user identifier or the recipient information, so that the recipient user terminal stores the short message icon and the corresponding short message icon identifier; and
storing the recipient user identifier, the recipient information, and a short message icon identifier that are corresponding to a short message icon sent to the recipient user terminal.

3. The method according to claim 2, wherein: the selecting, according to the sender information and recipient information of the short message, the short message icon identifier to be displayed by the recipient user terminal specifically comprises:
obtaining, according to the recipient information, a stored short message icon identifier corresponding to the short message icon sent to the recipient user terminal; and selecting, according to the sender information of the short message and the stored short message icon identifier corresponding to the short message icon sent to the recipient user terminal, the short message icon identifier to be displayed by the recipient user terminal.

4. The method according to claim 2 or 3, further comprising:
determining, according to recipient information carried in the first short message, that the recipient user terminal supports dynamically displaying a short message icon.

5. The method according to claim 4, wherein the determining, according to the recipient information carried in the first short message, that the recipient user terminal supports dynamically displaying a short message icon comprises:
obtaining device capability information of the recipient user terminal according to the recipient information carried in the first short message; and
determining, according to the device capability information of the recipient user terminal, that the recipient user terminal supports dynamically displaying a short message icon.

6. The method according to claim 5, wherein the determining that the recipient user terminal supports dynamically displaying a short message icon comprises:
determining, according to the device capability information of the recipient user terminal, that the recipient user terminal supports a function of customizing an over-the-air (OTA) technology and a function of receiving extended short messages.

7. The method according to claim 2, wherein the location update message further carries a recipient hardware identifier, and the method further comprises:
obtaining, according to the recipient hardware identifier, device capability information corresponding to the hardware identifier; and
storing the recipient hardware identifier, the device capability information, and the recipient user identifier; or storing the recipient hardware identifier, the device capability information, the recipient user identifier, and the recipient information; and
the sending the short message icon and the corresponding short message icon identifier to the recipient user terminal according to the recipient user identifier or the recipient user information comprises: obtaining the device capability information of the recipient user terminal according to the recipient user identifier or the recipient user information, and sending the short message icon and the corresponding short message icon identifier to the recipient user terminal according to the device capability information of the recipient user terminal and the recipient user identifier.

8. The method according to claim 7, further comprising:
sending, according to a stored short message icon identifier, the recipient user identifier, and the device capability information of the recipient user terminal, a short message icon identifier that needs to be deleted to the recipient user terminal, so that the recipient user terminal deletes the stored short message icon identifier and corresponding short message icon according to the short message icon identifier that needs to be deleted.

9. A method for dynamically displaying a short message icon, comprising:
receiving a short message, wherein the short message carries a short message icon identifier;
obtaining, according to the short message icon identifier, a stored short message icon corresponding to the short message icon identifier; and
displaying the short message icon.

10. The method according to claim 9, further comprising:
sending a location update message, wherein the location update message carries a recipient user identifier and recipient information, so that a terminal for dynamically displaying a short message icon sends a short message icon and a corresponding short message icon identifier according to the recipient user identifier or the recipient information; and
receiving the short message icon and the corresponding short message icon identifier that are sent by the terminal for dynamically displaying a short message icon, and storing the short message icon and the corresponding short message icon identifier.

11. The method according to claim 10, wherein the location update message further carries a recipient hardware identifier, so that the terminal for dynamically displaying a short message icon obtains, according to the recipient hardware identifier, device capability information corresponding to the hardware identifier, and determines, according to the device capability information, that the recipient user terminal supports dynamically displaying a short message icon.

12. The method according to any one of claims 9-11, further comprising:
receiving a short message icon identifier that needs to be deleted; and
deleting a stored short message icon identifier and corresponding short message icon according to the short message icon identifier that needs to be deleted.

13. A server for dynamically displaying a short message icon, comprising:
a receiving unit, configured to receive a first short message sent to a recipient user terminal, wherein the first short message carries sender information and recipient information of the short message;
a selecting unit, configured to select, according to the sender information and recipient information of the short message, a short message icon identifier to be displayed by the recipient user terminal; and
a sending unit, configured to send a second short message to the recipient user terminal, wherein the second short message carries the selected short message icon identifier so that the recipient user terminal displays, according to the selected short message icon identifier, a short message icon corresponding to the selected short message icon identifier.

14. The server according to claim 13, wherein: the receiving unit is further configured to receive a location update message sent by the recipient user terminal, wherein the location update message carries a recipient user identifier and recipient information;
the sending unit is further configured to send a short message icon and a corresponding short message icon identifier to the recipient user terminal according to the recipient user identifier, so that the recipient user terminal stores the short message icon and the corresponding short message icon identifier; and
the server further comprises: a storing unit, configured to store the location update message sent by the recipient user terminal, and store the recipient user identifier, the recipient information, and the short message icon identifier that are corresponding to the short message icon sent to the recipient user terminal.

15. The server according to claim 14, wherein the selecting unit is specifically configured to obtain, according to the recipient information, a stored short message icon identifier corresponding to the short message icon sent to the recipient user terminal; and select, according to the sender information of the short message and the stored short message icon identifier corresponding to the short message icon sent to the recipient user terminal, the short message icon identifier to be displayed by the recipient user terminal.

16. The server according to claim 14 or 15, further comprising:
a determining unit, configured to determine, according to capability information comprised in the recipient information, that the recipient user terminal supports dynamically displaying a short message icon.

17. The server according to claim 14, wherein:
the location update message further carries a recipient hardware identifier; the server further comprises an obtaining unit, configured to obtain, according to the recipient hardware identifier, device capability information corresponding to the hardware identifier;
the storing unit is further configured to store the recipient hardware identifier, the device capability information, and the recipient user identifier; or store the recipient hardware identifier, the device capability information, the recipient user identifier, and the recipient information; and
the sending unit being further configured to send, according to the recipient user identifier, the short message icon and the corresponding short message icon identifier to the recipient user terminal comprises: obtaining, by the sending unit, device capability information of the recipient user terminal according to the recipient user identifier, and sending the short message icon and the corresponding short message icon identifier to the recipient user terminal according to the device capability information of the recipient user terminal and the recipient user identifier.

18. The server according to claim 17, wherein the sending unit is further configured to send, according to a stored short message icon identifier, the recipient user identifier, and the device capability information of the recipient user terminal, a short message icon identifier that needs to be deleted to the recipient user terminal, so that the recipient user terminal deletes the stored short message icon identifier and the corresponding short message icon according to the short message icon identifier that needs to be deleted.

19. A terminal for dynamically displaying a short message icon, comprising:
a receiving unit, configured to receive a short message, wherein the short message carries a short message icon identifier;
an obtaining unit, configured to obtain, according to the short message icon identifier, a stored short message icon corresponding to the short message icon identifier; and
a displaying unit, configured to display the short message icon.

20. The terminal according to claim 19, further comprising:
a sending unit, configured to send a location update message, wherein the location update message carries a recipient user identifier and recipient information, so that a server for dynamically displaying a short message icon sends a short message icon and a corresponding short message icon identifier according to the recipient user identifier or the recipient information; wherein
the receiving unit is further configured to receive the short message icon and the corresponding short message icon identifier that are sent by the server for dynamically displaying a short message icon, and store the short message icon and the corresponding short message icon identifier.

21. The terminal according to claim 20, wherein the receiving unit is further configured to receive a short message icon identifier that needs to be deleted; and the terminal further comprises:
a deleting unit, configured to delete stored short message icon identifier and corresponding short message icon according to the short message icon identifier that needs to be deleted.
